# EUROPEAN PATENT APPLICATION

(11) **EP 4 506 282 A1**
(43) Date of publication of application: **12.02.2025**
(21) Application number: 23191194.2
(22) Date of filing: 11.08.2023
(51) Int. Cl.: B65G 45/02, F16N 29/02

(54) **A LUBRICATION SYSTEM FOR LUBRICATING A CONVEYOR**

(30) Priority: 07.08.2023 PT 2023118856
(71) Applicant: Neo Conveying Intelligence, Unipessoal Lda, 3740-425 Aveiro (PT)
(72) Inventor: SACHS-EHALT, MARC, 4400-556 VILA NOVA DE GAIA (PT)
(74) Representative: Patentree

(57) **Abstract**

The present disclosure relates to a lubrication system for automatically applying a lubricant to a conveyor machine, comprising: a pumping mechanism for providing a flow of lubricant to a lubrication point or points; an electric consumption sensor for providing an electric consumption signal; a programmable control unit operatively connected to the pumping mechanism, the control unit configured to control the flow of lubricant in relation to the electric consumption signal.

## Description

### TECHNICAL FIELD

The present disclosure relates to a lubrication system for lubricating conveyors or conveyors belts. Particularly, relates to a lubrication system for controlling the lubrification of conveyors for bottling line. The disclosure aims to ensure optimal lubrication performance, minimize maintenance requirements, and thus extend equipment operational life.

### BACKGROUND

A bottling line is composed of machines performing various operations depending on the type of product bottled. The main machine, or often referred to as the Critical Machine, is usually the bottle filler.

All machines in the bottling unit are interconnected by conveyor systems that perform different functions. A conveyor is composed of a structure, a geared motor, transport chains and slides / rollers supporting these chains.

A lubrication system is usually installed on the conveyor to ensure an adequate relative slip coefficient between containers and pallet chains, between pallet chains and slides and to improve friction between chain link joints.

A correct slip coefficient (between 0.08 and 0.12) limits the pressure between the containers and reduces the energy consumption required for the proper functioning of the conveyors and also helps to ensure the good performance of the line.

An example of a returnable glass bottling line comprises:
Decrater - Bottle Washer: Decrated bottles are dirty (external storage, open transport, etc ...) and bring a large amount of dirt (wood, strings, metal objects, etc.) Frequent lubrication and cleaning are necessary, as the accumulation of dirt on the conveyor chains increases the sliding coefficient and deteriorates performance and equipment.
Bottle washer - Filler: The high washing temperatures cause bottle breaks and debris will appear at the exit of the washer, in addition, the chains are watered by the rinse water driven by the clean bottles. Depending on the hardness of the water, deposits can become embedded on the chains or in the links and thus increase the coefficients of friction.
Filler - Pasteurizer - Labeller - Packer: In this area the products are clean but may have poor seals. This can cause effects of gluing the chain on the slides and the development of microorganisms responsible for fermentation and bad odors. In addition, pasteurizer outlets have the same effects as washer, debris and cooling water outlets.
Depalletizer - Decrater - Crate washer - Packer - Palletizer - Crate conveyors: It is the most stressed area in terms of wear, pressure, dirt deposition and is generally difficult to access or far from areas of common operations. It is therefore essential to use the right lubricants and disinfectants to ensure an optimal and constant slip coefficient to preserve yields, equipment, and quality of finished products.

The importance of lubrication by conveyor function can be divided in the following effects:
Accumulation / Dosing: It is the function of a bottling unit that requires the most of a low slip coefficient. The conveyors are filled with bottles and the chains move forward, so it is important to have a relative movement between the product and the chains, and between the chains and slides with a high weight of products.
Acceleration / Deceleration / Input + Output of single-line machines: These functions are subjected to high speeds and the variation in the slip coefficient will influence the stability of the products.
Transit: This is the least solicited function, there is theoretically no relative movement between the product and the chains. The speeds of the chains are generally quite low (approx. 15m/min).

Inadequate lubrication can cause several problems to the line. Over-lubrication can lead to excessive buildup of grease or oil, attracting dirt and debris, which can create a sticky, abrasive mixture that increases wear and causes components to malfunction. Under-lubrication can result in increased friction, heat, and premature wear of moving parts. Furthermore, the inadequate lubrication can also cause the conveyor line to produce excessive noise, which can be distracting and indicate potential issues.

Conveyor lubrication systems for bottling units are generally composed of:
a lubrication unit preparing the mixture of water and concentrated lubricant, via a dosing pump;
a set of solenoid valves distributed mainly by zones;
lubrication ramps connected to conveyors.

The opening of solenoid valves is usually done by delay and does not consider the condition of the conveyor, nor the conveyor function, nor necessarily the area in which the conveyor is located. This implies that the chains can be lubricated unnecessarily.

Some lubrication ramps are mounted underneath the conveyor and if there is a lack of pressure from the lubricant network, the injected product goes to the ground instead of attaching to the chains.

The lubricant is injected on the chains but also falls back to the ground. It is then evacuated via the gutters and will end up in the treatment plants.

This implies an overconsumption of lubricant, water, and electricity because the user does not know if the conveyor is well lubricated. Not to mention the influence that this poor management can have on the performance of the bottling line.

WO0127005 discloses a method for automatically cleaning and lubricating conveyor belt systems. A microprocessor controlled control unit senses the movement of the conveyor belt and the presence of items, for example bottles, on the conveyor. The control units initiate the application of lubricant, detergent and rinse water onto the conveyor according to the speed of the conveyor, the presence of items and the time passed since the previous application. If the conveyor is stationary, that is, is not in motion, no lubricant or cleaning solution is applied. If the conveyor is moving but no items are on the belt, a reduced amount of lubricant is dispensed onto the conveyor system.

The document US4226325 discloses an apparatus for continuously lubricating a conveyor belt with a mixture of water and soap or detergent during normal operation and for washing the conveyor belt during a preselected time interval after normal operation has ceased. Solenoid valves are interposed in water lines to a lubricating nozzle and wash nozzles to control the flow of water to the nozzles, and pumps are provided to inject soap or detergent into each of the water lines. During normal conveyor operation, electrical power is supplied only to the lubricating line solenoid valve and the lubricating line pump to produce a lubricating spray of water and soap or detergent from the lubricating nozzle which is directed onto the belt. When the master on-off switch is switched to the "off" position, a wash timer is actuated for a predetermined interval of time and cooperates with a relay to also enable the wash line solenoid valve and the wash line pump to deliver water and soap or detergent to the wash nozzle for cleansing the conveyor belt.

In these documents, the lubrication is performed when the conveyor is running and lubrication is stopped when the conveyor stops. The need for lubricant is not measured and can be subject to over-consumption or under-consumption, not taking in consideration the reducing the pressure between the containers that are in the conveyor.

These facts are disclosed in order to illustrate the technical problem addressed by the present disclosure.

### GENERAL DESCRIPTION

The present disclosure relates to a lubrication system to lubricate a conveyor on an efficient manner.

It is disclosed a lubrication system to control the lubrication of an automated conveyor to enhance the efficiency, reduce maintenance costs, and prolong the lifespan of conveyors used in any kind of industries. The disclosure refers to an innovative lubrication system that ensures precise and controlled application of lubricants to critical conveyor components, thereby reducing friction, wear, and energy consumption.

It is disclosed an independent system, capable of being installed on any kind of line that has a conveyor or conveyor belt, including bottling lines.

The present disclosure allows a lubricant injection controlled by the current consumption consumed by the geared motor driving the conveyor. This makes it possible to have an optimized control of lubricant consumption while guaranteeing the proper functioning of the conveyor systems installed on the line.

It is disclosed a lubrication system for automatically applying a lubricant to a conveyor machine, comprising:
a pumping mechanism for providing a flow of lubricant to a lubrication point or points;
an electric consumption sensor for providing an electric consumption signal;
a programmable control unit operatively connected to the pumping mechanism, the control unit configured to control the flow of lubricant in relation to the electric consumption signal.

In an embodiment, the control unit is configured to control the flow of lubricant in a positive relation to the electric consumption signal. Higher values of electric consumption are associated with higher values of flow of lubricant. The disclosed positive relationship between electric consumption and flow of lubricant typically means that the correlation between them is controlled to be positive.

If the electricity consumption decreases, the pumping mechanism will be closed. Namely, if the electricity consumption is equal or less than the initial electricity consumption than the pumping mechanism will not provide flow to the lubrication point or points of the conveyor.

If the electricity consumption increases, namely if the consumption is higher than the initial consumption, than the pumping mechanism will provide flow to the lubrication point or points of the conveyor.

If the electricity consumption increases, even with a longer injection then an instruction to check the conveyor is send to the customer.

In an embodiment, the control unit is configured to open the flow of lubricant if the electric consumption signal is above a predetermined threshold.

In an embodiment, the control unit is configured to open the flow of lubricant if the electric consumption signal is above a threshold predetermined from multiplying the electric consumption signal of normal operation by a predetermined multiplicative factor.

In an embodiment, the control unit is configured to open the flow of lubricant if the electric consumption signal is above a threshold determined by a pretrained machine learning model.

In an embodiment, the conveyor is a belt conveyor, a roller conveyor, a chain conveyor, a bucket conveyor, a vibrating conveyor, a magnetic conveyor, a slat conveyor or an overhead conveyor.

In an embodiment, the pumping mechanism comprises a valve or a pump for providing the flow of lubricant to the lubrication point or points.

In an embodiment, the electric consumption sensor is a power or current sensor. Preferably the electric consumption sensor is arranged near the motor of the conveyor.

In an embodiment, the lubrication system further comprises a lubricant reservoir for storing a lubricant and providing lubricant to the pumping mechanism.

In an embodiment, the lubrication system further comprises a distribution system connected to the pumping mechanism and for transporting the lubricant to multiple lubrication points within the machine.

In an embodiment, the lubrication system further comprises a power source for providing energy to the pumping mechanism and the programmable control unit.

Lubrication system according to any of the previous claims wherein the pumping mechanism comprises a motor-driven pump or a hydraulic system.

In an embodiment, the lubrication system further comprises a distribution system comprising a network of tubes, hoses, or channels for transporting the lubricant from the pump to the specific lubrication points within the conveyor machine.

### BRIEF DESCRIPTION OF THE DRAWINGS

The following figures provide preferred embodiments for illustrating the disclosure and should not be seen as limiting the scope of invention.
**Figure 1****:** Schematic representation of an embodiment of the lubrication system for a conveyor where the pumping mechanism is not providing a flow of lubricant to a lubrication point or points.
**Figure 2****:** Schematic representation of an embodiment of the lubrication system for a conveyor where the pumping mechanism is providing a flow of lubricant to a lubrication point or points.

### DETAILED DESCRIPTION

The present disclosure relates to a lubrication system for automatically applying a lubricant to a conveyor machine, comprising: a pumping mechanism for providing a flow of lubricant to a lubrication point or points; an electric consumption sensor for providing an electric consumption signal; a programmable control unit operatively connected to the pumping mechanism, the control unit configured to control the flow of lubricant in relation to the electric consumption signal.

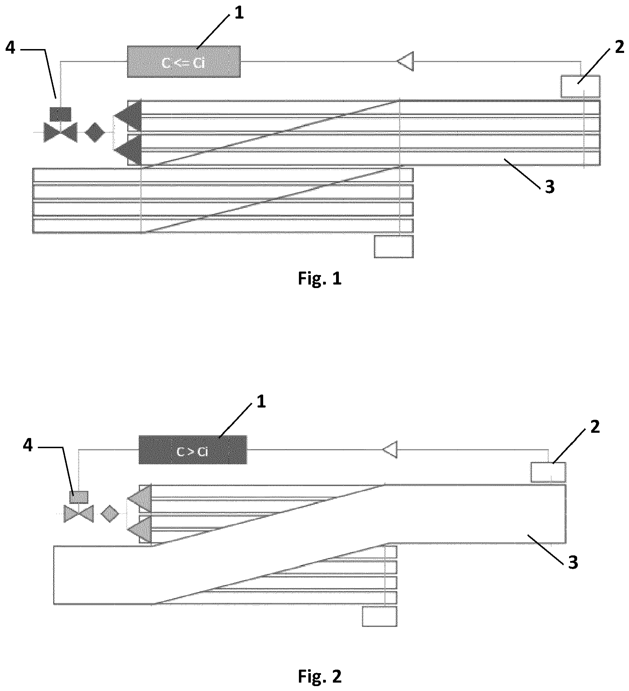

In an embodiment, **Figure 1** shows a schematic representation of an embodiment of a conveyor comprising the lubrication system where: **1** represents the programmable control unit, **2** represents the motor of the conveyor, **3** represents the chains and slides or rollers of the conveyor and **4** represents the valve of the pumping mechanism, preferably the solenoid valve. In this figure, the lubrication system is not providing a lubricant flow to the conveyor. If the electricity consumption decreases (the electric consumption is equal or lower than the initial electric consumption - C <= Ci), the solenoid valve of the ramps which injects the lubricant on the conveyor is closed.

In an embodiment, the valve is closed because the electric consumption signal is equal or bellow a predetermined threshold. Preferably the predetermined threshold is obtained in the start of the conveyor.

In an embodiment, the valve is closed because the electric consumption signal is equal or below the threshold determined by a pretrained machine learning model.

In an embodiment, **Figure 2** shows a schematic representation of an embodiment of a conveyor comprising the lubrication system where: **1** represents the programmable control unit, **2** represents the motor of the conveyor, **3** represents the chains and slides or rollers of the conveyor and **4** represents the valve of the pumping mechanism, preferably the solenoid valve. In this figure, the system is providing a flow of lubricant to the conveyor.

If the electricity consumption increases, the solenoid valve is opened (the electric consumption is higher than the initial electric consumption - C > Ci).

If the electricity consumption increases, even with a longer injection of lubricant, then an instruction to check the conveyor is send to the customer.

In an embodiment, the valve is open because the electric consumption signal is above a predetermined threshold. Preferably the predetermined threshold is obtained in the start of the conveyor.

In an embodiment, the valve is open because the electric consumption signal is above the threshold determined by a pretrained machine learning model.

In an embodiment, the threshold is predetermined or determined by a pretrained machine learning model when there is no pressure between the containers that are being transported in the conveyor. Preferably the containers are bottles.

In an embodiment, the electric consumption sensor is a power sensor or a current sensor. Preferably, the electric consumption sensor is arranged near the motor of the conveyor. Most preferably, the electric consumption sensor is arranged above the motor of the conveyor.

In an embodiment, the lubrication system controls the amount of lubricant flow that is provided to a lubrication point of the conveyor.

In an embodiment, the pumping mechanism provides lubricant flow when the conveyor is working. There is no need for the user to stop the function of the conveyor or the removal of the container, to provide lubrication.

In an example, 4 areas on a returnable glass bottling line and 3 different conveying functions.

The Bottle washer - Filler zone only contains the accumulation/dosing conveying function, i.e. 1 solenoid valve.

The Bottle washer - Filler zone contains the accumulation/dosing and acceleration / Deceleration / Input + Output conveying functions of single-line machines, i.e. 2 solenoid valves.

The Filler - Pasteurizer - Labeler - Packer area is made up of acceleration / Deceleration / Input + Output of single-line machines, accumulation/dosing and transit functions between filler and pasteurizer. We will find the same functions between pasteurizer and labeller and the acceleration / Deceleration / Input + Output functions of single-line machines, accumulation / dosing between labeller and packer, i.e. 8 solenoid valves.

The Depalletizer - Decrater - Crate washer - Packer - Palletizer area will be made up of 4 solenoid valves allowing lubrication control between machines.

The control device is located as close as possible to the solenoid valve clusters, i.e. in the center of the bottling line and in an area accessible by an operator.

The information on the variation in current consumption is sent to the device via a cable connecting the frequency converter controlling the motor and which is located in an electrical cabinet generally located in a specific room. The number of controlled motors is equal to the number of solenoid valves, i.e. 15 for the example of a returnable glass bottling line.

In an embodiment, the conveyor transports bottles, cans, crates, boxes, packages, among other products.

In an embodiment, a conveyor belt for accumulation/dosing in a bottle line, with a length around 7.7 meters and a width around 500 mm, where the friction coefficient is 0.10, if the electric consumption is higher than 2 A than the lubricant flow must be provided.

In an embodiment, for accumulation/dosing in a bottle line, a conveyor belt with a length of 9 meters and a width around 1.3 meters, where the friction coefficient is 0.10, if the electric consumption is higher than 4 A than the lubricant flow must be provided.

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof. The above described embodiments are combinable.

The following claims further set out particular embodiments of the disclosure.

## Claims

1. A lubrication system for automatically applying a lubricant to a conveyor machine (3), comprising:
a pumping mechanism for providing a flow of lubricant to a lubrication point or points;
an electric consumption sensor for providing an electric consumption signal;
a programmable control unit (1) operatively connected to the pumping mechanism, the control unit configured to control the flow of lubricant in relation to the electric consumption signal.

2. Lubrication system according to the previous claim wherein the control unit is configured to control the flow of lubricant in a positive relation to the electric consumption signal.

3. Lubrication system according to any of the previous claims wherein the control unit is configured to open the flow of lubricant if the electric consumption signal is above a predetermined threshold.

4. Lubrication system according to any of the previous claims wherein the control unit is configured to open the flow of lubricant if the electric consumption signal is above a threshold predetermined from multiplying the electric consumption signal of normal operation by a predetermined multiplicative factor.

5. Lubrication system according to any of the previous claims 1 to 2 wherein the control unit is configured to open the flow of lubricant if the electric consumption signal is above a threshold determined by a pretrained machine learning model.

6. Lubrication system according to any of the previous claims wherein the pumping mechanism comprises at least one valve or one pump for providing the flow of lubricant to the lubrication point or points.

7. Lubrication system according to the previous claim wherein the valve is a solenoid valve (4).

8. Lubrication system according to any of the previous claims wherein the electric consumption sensor is arranged near a motor (2) of the conveyor machine.

9. Lubrication system according to any of the previous claims wherein the electric consumption sensor is a power or current sensor.

10. Lubrication system according to any of the previous claims further comprising a lubricant reservoir for storing a lubricant and providing lubricant to the pumping mechanism.

11. Lubrication system according to any of the previous claims further comprising a power source for providing energy to the pumping mechanism and the programmable control unit (1).

12. Lubrication system according to any of the previous claims wherein the pumping mechanism comprises a motor-driven pump or a hydraulic system.

13. Lubrication system according to any of the previous claims further comprising a distribution system connected to the pumping mechanism and for transporting the lubricant to multiple lubrication points within the machine.

14. Lubrication system according to the previous claim wherein the distribution system comprises a network of tubes, hoses, or channels for transporting the lubricant from the pump to the specific lubrication points within the conveyor machine.
